# EUROPEAN PATENT APPLICATION

(11) **EP 1 806 544 A1**
(43) Date of publication of application: **11.07.2007**
(21) Application number: 06026558.4
(22) Date of filing: 21.12.2006
(51) Int. Cl.: F24H 9/12, F16L 37/088, F16L 37/50

(54) **Quick-fit radiator connector**

(30) Priority: 06.01.2006 GB 0600245
(71) Applicant: Myson Heating Controls Limited, County Limerick (IE)
(72) Inventor: Rowley, Patrick, County Limerick (IE)
(74) Representative: Denmark, James Christopher

(57) **Abstract**

A system for connecting a radiator valve to a pipe or other component comprising a radiator valve and an adaptor joint wherein the adaptor joint has a first end adapted to receive a pipe or other component and an second opposing end having a circumferential slot in the end portion in which is located a resilient retaining means; the radiator valve having a chamber adapted to receive the second end portion of the adaptor joint, the chamber comprising a first portion having a first diameter and a second portion inward of the first portion of a larger diameter than the first diameter; the retaining means being compressible from a relaxed position in which the retaining means has a diameter greater than that of the first portion of the chamber opening and a compressed position in which the retaining means is retracted within the slot sufficiently to permit the adaptor joint end portion including the retaining means to be inserted through the first portion of the chamber into the second portion of the chamber wherein the resilient retaining means returns to its relaxed position and thereby prevents withdrawal of the adaptor joint from the valve chamber, the system further comprising sealing means to provide a water-tight seal between the adaptor joint and the valve chamber.

## Description

The present invention relates to a quick-fit connector for use with radiators, in connecting a radiator valve with a pipe or other fitting, in particular, but not exclusively, with a plastic pipe, providing a simple push-fit connection.

Typically, existing adaptor elbows use a plastic pipe connection at one end to connect to the plastic pipe used in the heat distribution system and a normal brass nut and compression olive to connect to a standard radiator valve. The nut and olive arrangement makes a rigid connection between elbow and valve and requires a degree of skill to ensure a leak-tight connection. It is also necessary to ensure that the components to be joined are cut relatively accurately to length. Thus, establishing a connection between a radiator and the associated pipe can be time consuming and requires a skilled fitter.

There is a need for a system that enables a connection between a radiator and pipe work quickly and that can be used by relatively unskilled persons. The, present invention provides a new system that continues to use established plastic pipe connections to the distribution system but incorporates a new quick fit design to connect to a specialised radiator valve. It may be assembled with confidence by unskilled personnel and the assembled components may be rotated to any desired orientation to aid assembly. The system also incorporates limited vertical height adjustment to further aid the assembly process.

Accordingly the present invention provides a system for connecting a radiator valve to a pipe or other component comprising a radiator valve and an adaptor, joint wherein the adaptor joint has a first end adapted to receive a pipe or other component and an second opposing end having a circumferential slot in the end portion in which is located a resilient retaining means; the radiator valve having a chamber adapted to receive the second end portion of the adaptor joint, the chamber comprising a first portion having a first diameter and a second portion inward of the first portion of a larger diameter than the first diameter; the retaining means being compressible from a relaxed position in which the retaining means has a diameter greater than that of the first portion of the chamber opening and a compressed position in which the retaining means is retracted within the slot sufficiently to permit the adaptor joint end portion including the retaining means to be inserted through the first portion of the chamber into the second portion of the chamber wherein the resilient retaining means returns to its relaxed diameter and thereby prevents withdrawal of the adaptor joint from the valve chamber, the system further comprising sealing means to provide a water-tight seal between the adaptor joint and the valve chamber.

Preferably, the larger diameter is at least as large dimensionally as the outer diameter of the retaining means in its relaxed condition.

In a preferred embodiment, the axial distance over which the second portion of the chamber extends is greater than the axial dimension, for example the thickness, of the retaining means provided on the adapter joint end portion.

In this manner the adapter joint end portion can be sealingly (when O-ring seals are additionally provided as mentioned below) snap-fitted within the chamber in a manner which allows said adapter joint end to moved axially to and fro to a limited extent without compromising the seal. This arrangement allows for slight axial play of the adapter joint while nevertheless being securely and safely coupled to the radiator valve and thus facilitates the connection of the alternate end of the adapter joint to the pipe work by virtue of the slight adjustment which can be achieved in the position of said adapter joint as a result of said axial play.

The adaptor joint can be of any shape but will typically be an elbow joint. The adaptor joint will typically be made of brass or any other metal suitable for use in radiator systems but may instead be made of a suitable plastics material. The first end is adapted to receive a pipe or other component and may be a simple push fit or may be adhesively bonded.

Preferably the first end is adapted to receive a plastic pipe and advantageously incorporates a quick-fit receiving element.

The second end of the adaptor joint is provided with a slot in which is located a resilient retaining means. The retaining means will typically be a circlip or similar which in its relaxed state will have an inner diameter sufficiently small that at least a part of the clip is located within the slot and an outer diameter greater than the diameter of the second end portion of the adaptor joint. The circlip may be compressed within the slot such that the outer diameter of the circlip is reduced.

Sealing means are provided to create a water-tight seal between the adaptor joint and the valve chamber. The sealing means may be located in the valve chamber or around the valve chamber opening. Preferably the seating means comprises one or more seal elements on the end portion of the adaptor joint dimensioned to make a sealing contact with the inner face of the valve chamber. In a preferred embodiment the sealing means comprises a plurality of deformable sealing rings located in slots provided on the end portion of the adaptor joint and dimensioned to make a sealing fit with the inner face of the valve chamber.

Once the circlip within the chamber has achieved its relaxed diameter the adaptor joint cannot be withdrawn from the valve body. A desired amount of vertical movement can be provided by making the length of the valve chamber longer than that of the end portion of the adaptor joint. This can be limited either by the length of the chamber or by proving a further section of reduced diameter in the chamber such that further inward movement is limited by engagement of the retaining means with the second reduced diameter section of the valve chamber. The first end of the adaptor joint may also be provided with an amount of free play. The adaptor joint is free to rotate within the valve chamber.

Whilst it is preferred that the system comprises an adaptor joint and a valve comprising a suitable chamber to receive the adaptor joint, it is also possible to provide the separate valve chamber to be connected to a conventional valve.

The invention will now be described by reference to the accompanying drawing which shows a schematic representation of a preferred embodiment of the invention.

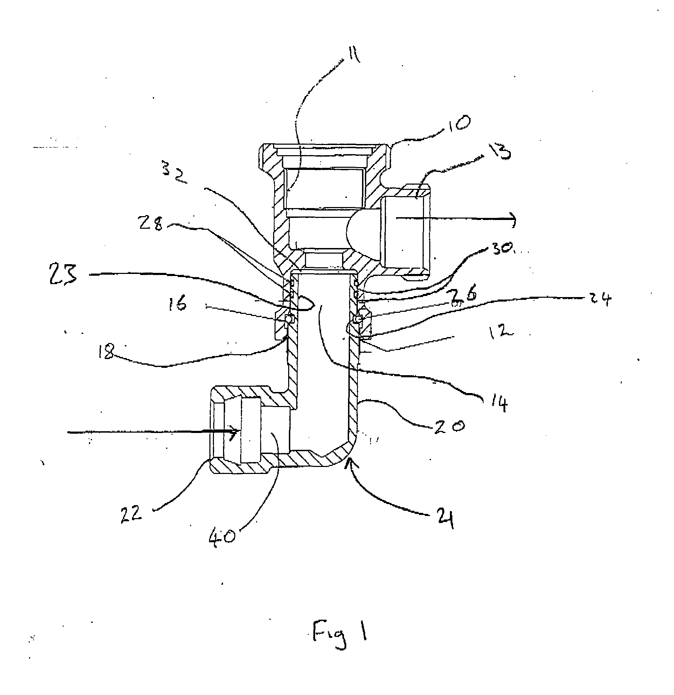

Referring to Figure 1, there is shown a valve body 10, having an opening 12 having a tapered lead-in edge 18 in communication with a chamber 14. The valve body when in use is connected to a radiator by conventional means at outlet 13. Flow through the valve is regulated by a valve core (not shown) located in the upper portion 11 of the valve body. A recess 16 is provided in the valve chamber inward of the valve opening 12 such that the diameter of the chamber in the recess is greater than that of the opening. An adaptor joint 21 is shown having a first end 22 adapted to receive a pipe 40. On the opposing end 23 the adaptor joint 21 is provided with a slot 24 in which is located a circlip 26. There is also provided a pair of o-ring seals 28 located in slots 30.

It is to be seen from the Figure that, in the particular embodiment shown, the axial length of recess 16 is greater than both the axial length of slot 24 and of the thickness, in this case the diameter, of the circlip 26. It is therefore to be appreciated that the adapter joint end 23 can sealingly engage with a remote interior surface of the chamber 14 as shown, while nevertheless being simultaneously capable of moving axially to and fro by a distance substantially equal to the axial length of the recess 16. Of course, adapter joint end 23 is prevented from escaping from, or also being pushed to far into, the chamber 14 by virtue of the contact of the surface of the circlip 26 with one or other of the upper or lower side walls or corners of said recess. This arrangement, wherein some slight axial play of the adapter joint within the chamber 14 is permitted, may facilitate the connection of the alternate end 22 of the adapter joint to the pipe work by virtue of the slight adjustment which can be achieved in the position of said adapter joint 21.

In use the end of the adaptor joint 32 is pushed through the opening 12 of the valve body chamber. As the adaptor is inserted further the circlip 26 engages with the tapered lead-in edge 18 of the valve chamber opening 12 causing the circlip to be compressed within the slot 24 and permitting the circlip to pass through the opening. Once the circlip has passed into the recess 16 it expands to its uncompressed diameter. The inner diameter of the circlip 26 is less than the diameter of the adaptor joint and so is retained within the slot 24 and the diameter of the circlip is greater than that of the opening 12 and since the shoulder of the opening on the inward side is not tapered the circlip is not compressed when force is applied to pull the adaptor joint out from the valve body which combination prevents the adaptor joint horn being withdrawn from the valve body. A watertight seal between the adaptor joint and the valve body is provided by the double o-ring seals 28.

## Claims

1. A system for connecting a radiator valve to a pipe or other component comprising a radiator valve and an adaptor joint wherein the adaptor joint has a first end adapted to receive a pipe or other component and an second opposing end having a circumferential slot in the end portion in which is located a resilient retaining means; the radiator valve having a chamber adapted to receive the second end portion of the adaptor joint, the chamber comprising a first portion having a first diameter and a second portion inward of the first portion of a larger diameter than the first diameter; the retaining means being compressible from a relaxed position in which the retaining means has a diameter greater than that of the first portion of the chamber opening and a compressed position in which the retaining means is retracted within the slot sufficiently to permit the adaptor joint end portion including the retaining means to be inserted through the first portion of the chamber into the second portion of the chamber wherein the resilient retaining means returns to its relaxed position and thereby prevents withdrawal of the adaptor joint from the valve chamber; the system further comprising sealing means to provide a water-tight seal between the adaptor joint and the valve chamber.

2. A radiator connection system according to claim 1 wherein the resilient retaining means comprises a circlip.

3. A radiator connection system according to claim 1 or claim 2 wherein the inlet opening of the radiator valve body is chamfered so as to compress the resilient retaining means on insertion into the inlet opening of the valve body.

4. A radiator connection system according to any of claims 1 to 3 wherein the sealing means is provided on the second end portion of the adaptor joint.

5. A radiator connection system according to claim 4 wherein the sealing means comprises one or more sealing rings located on the adaptor joint.

6. A radiator connection system according to any of claims 1 to 5 wherein the first end portion of the adaptor joint includes means for making a push-fit connection with a plastic pipe.

7. An adaptor joint for a radiator connection system according to any of claims 1 to 6, the aadaptor joint having a first end adapted to receive a pipe or other component and an second opposing end having a circumferential slot in the end portion in which is located a resilient retaining means and means for forming a watertight seal with a valve body.

8. A radiator connection system substantially as herein before described with reference to the accompanying drawing.
